# EUROPEAN PATENT SPECIFICATION

(11) **EP 4 382 556 B1**
(45) Date of publication and mention of the grant of the patent: **24.12.2025**
(21) Application number: 22852761.0
(22) Date of filing: 30.06.2022
(51) Int. Cl.: C08J 3/24

(54) **METHOD OF CROSSLINKING ELASTOMER**
ELASTOMERVERNETZUNGSVERFAHREN
PROCÉDÉ DE RÉTICULATION D'ÉLASTOMÈRE

(30) Priority: 05.08.2021 JP 2021129378
(43) Date of publication of application: 12.06.2024
(73) Proprietor: BRIDGESTONE CORPORATION, Chuo-ku Tokyo 104-8340 (JP)
(72) Inventor: KAWADA, Midori, Tokyo 104-8340 (JP); HORIKAWA, Yasuo, Tokyo 104-8340 (JP); MIYANO, Mari, Tokyo 104-8340 (JP)
(74) Representative: Marks & Clerk LLP
(86) International application number: PCT/JP2022/026429
(87) International publication number: WO 2023/013335

(56) References cited:
- WO-A1-2017/029413
- CN-A- 108 341 958
- CN-A- 112 812 331
- JP-A- 2018 525 498
- JP-A- 2020 528 956
- JP-A- S5 529 520
- ANTOINE BREUILLAC ET AL: "Polybutadiene Vitrimers Based on Dioxaborolane Chemistry and Dual Networks with Static and Dynamic Cross-links", MACROMOLECULES, vol. 52, no. 18, 24 September 2019 (2019-09-24), US, pages 7102 - 7113, XP055697640, ISSN: 0024-9297, DOI: 10.1021/acs.macromol.9b01288
- LIU ZHU ET AL: "Self-healing and reprocessing of transparent UV-cured polysiloxane elastomer", PROCESS IN ORGANIC COATINGS, ELSEVIER BV, NL, vol. 159, 3 August 2021 (2021-08-03), XP086763041, ISSN: 0300-9440, [retrieved on 20210803], DOI: 10.1016/J.PORGCOAT.2021.106450

## Description

### TECHNICAL FIELD

The present invention relates to a method of crosslinking an elastomer.

### BACKGROUND

Recycling of vulcanized rubber (crosslinked rubber) in tires, etc. after use has been promoted in recent times in consideration of environmental issues and resource conservation. Although the devulcanization of vulcanized rubber is commonly known as a recycling technique for vulcanized rubber, this technique has a drawback of poor energy efficiency due to the extremely high temperature required in a devulcanization reaction.

Therefore, techniques for causing decomposition of vulcanized rubber by methods other than devulcanization are being studied. For example, Patent Literature (PTL) 1 discloses a decomposition and recovery method for vulcanized rubber in which vulcanized rubber is caused to decompose through a lipid peroxidation reaction, and then lipid is removed in alcohol having an alkali added thereto so as to recover rubber content. PTL 1 discloses that this method has a low decomposition reaction temperature, excellent energy efficiency, and a fast decomposition rate and yields a decomposition product that is easy to recycle and recover.

PTL 2 discloses a method of crosslinking a polymer comprising boronic ester by addition of a functional additive carrying at least two boronic ester groups enabling the formation of a crosslinked network by boronic ester metathesis reaction.

PTL 3 discloses a hybrid dynamic crosslinked polymer containing an organoborate bond and at least one inorganic boronate bond. Diboronic acid compounds are used for obtaining the hybrid dynamic crosslinked polymer.

NPL 1 describes re-processable and recyclable elastomeric vitrimers prepared by the radical grafting of a bis-thiol dioxaborolane onto un-entangled polybutadiene.

NPL 2 describes a crosslinked polysiloxane elastomers obtained by photo-crosslinking a diboronic ester crosslinker, a thiol-functionalized phenyl silicone resin and a vinyl-terminated phenyl silicone oil.

### CITATION LIST

### Patent Literature

PTL 1: JP2011-153272A
PTL 2 : WO 2017/029413 A1
PTL 3: CN 108 341958 A

NPL 1 : Breuillac, A., et al., Macromolecules, vol. 52, 24th September 2019, pages 7102-7113
NPL 2: Zhu, L., et al., Process in Organic Coatings, 3rd August 2021, vol. 158

### SUMMARY

### (Technical Problem)

However, the technique described in PTL 1 broadly takes vulcanized rubbers as decomposition subjects without giving any consideration to rubbers (crosslinked elastomers) crosslinked by methods other than vulcanization (sulfur crosslinking).

Moreover, from viewpoints of versatility and more effective utilization of materials, it would be extremely useful to focus on crosslinked elastomers themselves so as to develop a crosslinked elastomer that can easily be decrosslinked and that can also be recrosslinked (i.e., a crosslinked elastomer having "reversible crosslinkability").

Accordingly, the present disclosure addresses a problem of providing a method of crosslinking an elastomer that uses an elastomer that can easily be crosslinked and decrosslinked.

### (Solution to Problem)

As a result of diligent studies conducted with the aim of resolving the problem set forth above, the inventors discovered that by using an elastomer including a specific functional group at a site that is a crosslinking target, it is easy to perform crosslinking and subsequent decrosslinking under specific conditions with this site as a starting point, thereby leading to completion of the present disclosure. Specifically, primary features of the present invention for resolving the problem set forth above are as follows.

A method of crosslinking an elastomer according to the present invention comprises a step of causing contact of an elastomer including a monoboronic acid ester-containing functional group represented by general formula (4), shown below, 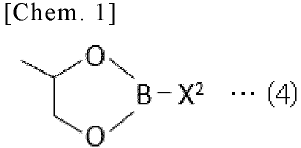 where, in general formula (4), X² is hydrogen or any monovalent group, with a diboronic acid compound in the presence of a solvent, wherein
the solvent has an SP value of not less than 10 (cal/cm³)^{1/2} and not more than 13 (cal/cm³)^{1/2} and includes at least a single solvent having an SP value of not less than 8 (cal/cm³)^{1/2} and not more than (cal/cm³)^{1/2}, the SP value being calculated in accordance with the Hansen method.

### (Advantageous Effect)

According to the present invention, it is possible to provide a method of crosslinking an elastomer that uses an elastomer that can easily be crosslinked and decrosslinked.

### DETAILED DESCRIPTION

The following describes embodiments of the present invention. However, the following description is intended for illustrative purposes only.

### (Method of crosslinking elastomer according to the present invention)

A method of crosslinking an elastomer according to the present invention is a method of crosslinking an elastomer including a monoboronic acid ester-containing functional group represented by general formula (4), shown below, 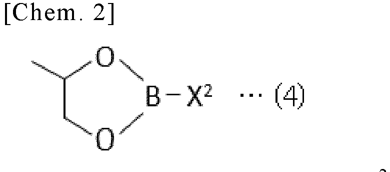 where, in general formula (4), X² is hydrogen or any monovalent group, and includes a step (diboronic acid contacting step) of causing contact of the elastomer with a diboronic acid compound in the presence of a solvent, wherein
the solvent has an SP value of not less than 10 (cal/cm³)^{1/2} and not more than 13 (cal/cm³)^{1/2} and includes at least a single solvent having an SP value of not less than 8 (cal/cm³)^{1/2} and not more than 10 (cal/cm³)^{1/2}, the SP value being calculated in accordance with the Hansen method.

Note that the "diboronic acid compound" referred to in the present specification is a compound including two boronic acids (-B(OH)₂) in one molecule.

When the elastomer described above is brought into contact with a diboronic acid compound in the presence of a specific solvent, an exchange reaction occurs at the monoboronic acid ester-containing functional group in the elastomer, thereby resulting in the monoboronic acid ester being replaced by an ester derived from the diboronic acid compound. Since the diboronic acid compound includes two boronic acids that function as bonding sites with the elastomer, this brings about linking (crosslinking) of the elastomer. Accordingly, crosslinking can easily be performed according to the crosslinking method of the present invention.

Moreover, by causing contact of the elastomer that has undergone crosslinking (crosslinked elastomer) with a monoboronic acid compound under specific conditions, an exchange reaction occurs at a crosslinking site of the crosslinked elastomer, thereby resulting in crosslinking via a diboronic acid ester skeleton unit being replaced by bonding of the monoboronic acid compound. Since the monoboronic acid compound only includes one boronic acid that functions as a bonding site with the elastomer, linking of the elastomer is undone (i.e., the elastomer is decrosslinked). Accordingly, the elastomer that is used in the crosslinking method of the present invention can easily be crosslinked and decrosslinked.

Furthermore, since the elastomer that has undergone decrosslinking has substantially the same structure as the elastomer used in the crosslinking method of the present invention, it can be expected that repeated decrosslinking and recrosslinking of the elastomer can easily be performed using the crosslinking method of the present invention.

### <Elastomer>

The elastomer that is used in the crosslinking method of the present invention includes a monoboronic acid ester-containing functional group represented by the following general formula (4). 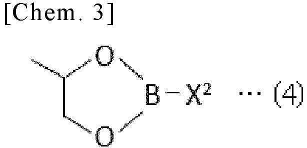 (In general formula (4), X² is hydrogen or any monovalent group.) The monovalent group that can constitute X² in general formula (4) may be a hydrocarbon group, for example, specific examples of which include linear and branched aliphatic groups (alkyl groups, alkenyl groups, and alkynyl groups) having a carbon number of 1 to 10; aromatic-containing groups having a carbon number of 6 to 20 (phenyl group, naphthyl group, biphenyl group, etc.); and heteroaromatic groups (2-furyl group, etc.). Moreover, -O-, -S-, -O-C(=O)-, -C(=O)-O-, -O-C(=O)-O-, -NR²-C(=O)-, -C(=O)-NR²-, -NR²-, or -C(=O)- may be interposed in the aforementioned aliphatic groups and aromatic-containing groups. Note that R² represents a hydrogen atom or an alkyl group having a carbon number of 1 to 6.

The elastomer that is used in the crosslinking method of the present invention is preferably an elastomer that is derived from a diene elastomer. In other words, the elastomer that is used in the crosslinking method of the present invention is preferably an elastomer obtained by providing a diene elastomer with a monoboronic acid ester-containing functional group. The diene elastomer is an elastomer that includes at least diene units and may be natural rubber (NR), butadiene rubber (BR), styrene-butadiene rubber (SBR), isoprene rubber (IR), chloroprene rubber (CR), or the like, for example. The diene elastomer may be one type of diene elastomer used individually or may be two or more types of diene elastomers used in combination. Of these examples, butadiene rubber (BR) and styrene-butadiene rubber (SBR) are preferable as the diene elastomer from a viewpoint of sufficiently ensuring mechanical strength of a rubber article such as a tire.

Moreover, the diene elastomer preferably has a vinyl bond content of 30 mass% or less and a weight-average molecular weight (Mw) of 1,000 or more. In other words, the elastomer that is used in the crosslinking method of the present invention is preferably derived from a diene elastomer having a vinyl bond content of 30 mass% or less and a weight-average molecular weight of 1,000 or more. When the vinyl bond content of the diene elastomer is 30 mass% or less, the occurrence of gelation during heating and forming of the elastomer can be effectively suppressed. Moreover, when the weight-average molecular weight (Mw) of the diene elastomer is 1,000 or more, sufficient entanglement arises in the elastomer after crosslinking, and adequate mechanical strength can be displayed upon use in a rubber article such as a tire. From the same viewpoint, the vinyl bond content of the diene elastomer is preferably 28 mass% or less, and more preferably 26 mass% or less. On the other hand, the lower limit for the vinyl bond content of the diene elastomer is preferably 3 mass% or more, more preferably 5 mass% or more, even more preferably 8 mass% or more, and particularly preferably 10 mass% or more.

Note that the vinyl bond content of the diene elastomer referred to in the present specification is the mass proportion of units that are diene units and that are vinyl bonded among the overall diene elastomer. In other words, the vinyl bond content of the diene elastomer is not the proportion constituted by vinyl bonded units among diene units.

Also note that the weight-average molecular weight (Mw) is determined by gel permeation chromatography (GPC) with polystyrene as a standard substance.

In a case in which the elastomer is derived from a diene elastomer, the above-described monoboronic acid ester-containing functional group in the elastomer is preferably bonded to a carbon that is a constituent of a vinyl group remaining in a vinyl bonded diene unit in the diene elastomer. Moreover, bonding of the monoboronic acid ester-containing functional group and the diene elastomer described above may be direct bonding or may be bonding via any group (for example, an alkylene group having a carbon number of 1 to 3).

A filler such as carbon black may be dispersed in the elastomer that is used in the crosslinking method of the present invention as a result of being compounded during production of the elastomer. In a case in which a filler is dispersed in the elastomer, the amount of this filler relative to 100 parts by mass of the elastomer can be set as 10 parts by mass or more, and can be set as 100 parts by mass or less.

The elastomer that is used in the crosslinking method of the present invention can be produced by various methods without any specific limitations. For example, the elastomer that is used in the crosslinking method of the present invention can be obtained by crosslinking a diene elastomer to obtain a crosslinked elastomer through a step A described below and subsequently returning a crosslinking site of the crosslinked elastomer to a non-crosslinked state through a step B described below.

### <Step A for obtaining elastomer>

The step A is a step of crosslinking a diene elastomer (diene elastomer not including a monoboronic acid ester-containing functional group) in the presence of a radical initiator using a diboronic acid ester compound represented by the following general formula (2). 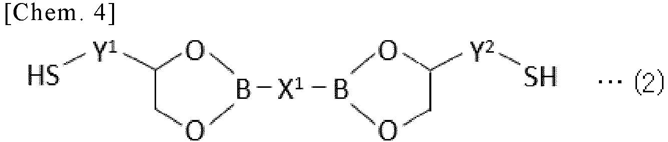 (In general formula (2), X¹ is a single bond or any divalent group, and Y¹ and Y² are each independently a single bond or a divalent hydrocarbon group.) This yields a crosslinked elastomer including a diboronic acid ester skeleton unit represented by the following general formula (1) at a crosslinking site. 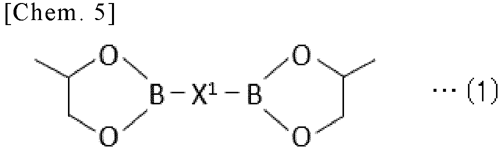 (In general formula (1), X¹ is a single bond or any divalent group.)

In the step A described above, the crosslinked elastomer can be obtained, more specifically, by compounding the radical initiator and the diboronic acid ester compound with the previously described diene elastomer, performing mixing thereof using a mixer or the like, and then heating the mixture. The heating temperature and time are preferably adjusted as appropriate in consideration of the vinyl bond content of the used diene elastomer, the type of used radical initiator, the amounts thereof that are used, and so forth.

Moreover, in addition to the diene elastomer, the radical initiator, and the diboronic acid ester compound, appropriate amounts of other components may be further compounded in the step A described above. Examples of other components include fillers such as carbon black.

### <Step B for obtaining elastomer>

The step B is a step of causing contact of the crosslinked elastomer obtained in the step A with a monoboronic acid compound represented by the following general formula (3) in the presence of an organic solvent. 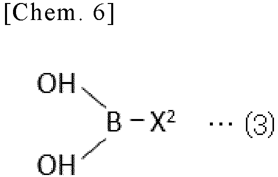 (In general formula (3), X² is hydrogen or any monovalent group.) In the step B, an exchange reaction occurs at the crosslinking site of the crosslinked elastomer, thereby resulting in crosslinking via the diboronic acid ester skeleton unit being replaced by bonding of the monoboronic acid compound. During the above, two elastomer crosslinking sites that are linked typically each become capped by a functional group represented by the following general formula (4): 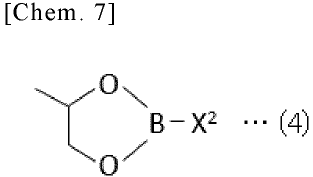 and thus return to a non-crosslinked state. In this manner, the elastomer that is used in the crosslinking method of the present embodiment can be obtained. Note that simultaneously to functional group capping in the step B, a diboronic acid compound represented by the following formula (9): 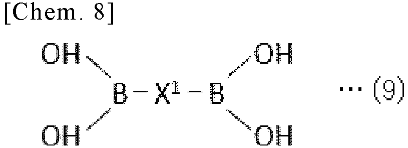 which is derived from the diboronic acid ester skeleton unit at the crosslinking site, is typically produced. This diboronic acid compound can be used as the diboronic acid compound that is essential in the crosslinking method of the present embodiment.

The organic solvent that is used in the step B preferably has an SP value of not less than 7 (cal/cm³)^{1/2} and not more than 10 (cal/cm³)^{1/2}. In this case, compatibility with the crosslinked elastomer increases, and the exchange reaction can more reliably be instigated.

Note that the SP value can be calculated in accordance with the Hansen method. Also note that the organic solvent may be a single solvent or may be a mixed solvent.

In the step B described above, a molar abundance ratio of the monoboronic acid compound relative to the diboronic acid ester skeleton unit (monoboronic acid compound/diboronic acid ester skeleton unit) is preferably more than 2 and not more than 5. In this case, linking of elastomer can effectively be undone, and subsequent crosslinking (i.e., crosslinking by the crosslinking method of the present invention) can more easily be performed.

The elastomer obtained through the step A and the step B described above is, put simply, an elastomer that has been decrosslinked. Moreover, in a case in which this decrosslinked elastomer is used to perform the crosslinking method of the present invention, the crosslinked elastomer that is obtained thereby has substantially the same structure as the crosslinked elastomer that was obtained in the step A. In other words, repeated decrosslinking and recrosslinking can easily be performed in this case.

### <Solvent>

The solvent that is used in the crosslinking method of the present invention is required to have an SP value of not less than 10 (cal/cm³)^{1/2} and not more than 13 (cal/cm³)^{1/2} and to include at least a single solvent having an SP value of not less than 8 (cal/cm³)^{1/2} and not more than 10 (cal/cm³)^{1/2}. In a situation in which the SP value of the overall solvent deviates from a range of not less than 10 (cal/cm³)^{1/2} and not more than 13 (cal/cm³)^{1/2}, compatibility with the elastomer decreases, and the exchange reaction at the monoboronic acid ester-containing functional group may not sufficiently occur. Moreover, in a situation in which a single solvent having an SP value of not less than 8 (cal/cm³)^{1/2} and not more than 10 (cal/cm³)^{1/2} is not included, compatibility with the elastomer decreases, and the exchange reaction at the monoboronic acid ester-containing functional group may not sufficiently occur. Furthermore, in a case in which a filler is dispersed in the elastomer, the SP value of the overall solvent is preferably 11 (cal/cm³)^{1/2} or more from a viewpoint of more reliably instigating the exchange reaction.

Note that the SP value is calculated in accordance with the Hansen method.

Examples of the single solvent having an SP value of not less than 8 (cal/cm³)^{1/2} and not more than 10 (cal/cm³)^{1/2} include toluene, tetrahydrofuran (THF), and so forth, but are not limited thereto.

### <Diboronic acid compound>

The diboronic acid compound that is used in the crosslinking method of the present invention may, for example, be a diboronic acid compound represented by the following general formula (9). 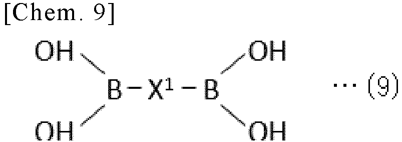 (In general formula (9), X¹ is a single bond or any divalent group.) The divalent group that can constitute X¹ in general formula (9) may be a hydrocarbon group, for example, specific examples of which include linear and branched aliphatic groups (alkylene groups, alkenylene groups, and alkynylene groups) having a carbon number of 1 to 10; and aromatic-containing groups having a carbon number of 6 to 20 (1,2-phenylene group, 1,3-phenylene group, 1,4-phenylene group, 1,4-naphthylene group, 1,5-naphthylene group, 2,6-naphthylene group, 4,4'-biphenylene group, etc.). Moreover, -O-, -S-, -O-C(=O)-, -C(=O)-O-, -O-C(=O)-O-, -NR²-C(=O)-, -C(=O)-NR²-, -NR²-, or -C(=O)- may be interposed in the aforementioned aliphatic groups and aromatic-containing groups. Note that R² represents a hydrogen atom or an alkyl group having a carbon number of 1 to 6.

The divalent group that can constitute X¹ in general formula (9) is preferably equivalent to a group having a hydrogen removed from the monovalent group that can constitute X² in the previously described general formula (4). As one example, in a case in which an elastomer for which X² in general formula (4) is a phenyl group is used, it is preferable to use a diboronic acid compound for which X¹ in general formula (9) is a phenylene group. In this case, the exchange reaction can more effectively be instigated.

### <Diboronic acid contacting step>

In the diboronic acid contacting step, the elastomer is brought into contact with the diboronic acid compound in the presence of the specific solvent described above. This contacting causes an exchange reaction to occur at the monoboronic acid ester-containing functional group in the elastomer. In a case in which a diboronic acid compound represented by general formula (9) is used, for example, two elastomer molecules are typically crosslinked via a site including a diboronic acid ester skeleton unit represented by the following general formula (1) during the above. 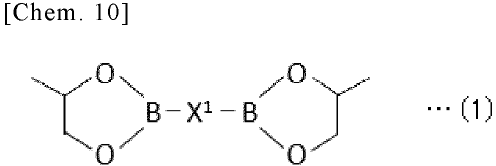 Simultaneously thereto, a monoboronic acid compound represented by the following general formula (3): 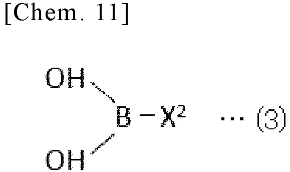 which is derived from the monoboronic acid ester-containing functional group, is typically produced.

The amount of the diboronic acid compound in the diboronic acid contacting step is preferably 20 parts by mass or less relative to 100 parts by mass of the elastomer. In this case, elastomer properties can sufficiently be retained after crosslinking. From the same viewpoint, the amount of the diboronic acid compound relative to 100 parts by mass of the elastomer is more preferably 16 parts by mass or less, and even more preferably 11 parts by mass or less. On the other hand, although no specific limitations are placed on the lower limit for the amount of the diboronic acid compound relative to 100 parts by mass of the elastomer so long as this amount is more than 0 parts by mass, the amount of the diboronic acid compound is preferably 1 part by mass or more, and more preferably 2 parts by mass or more from a viewpoint of increasing strength of the obtained crosslinked elastomer to a similar degree as with sulfur crosslinking.

The concentration of the elastomer (mass proportion of elastomer among total of elastomer and solvent) in the diboronic acid contacting step is preferably not less than 5 mass% and not more than 65 mass%. When the concentration of the elastomer is within the range set forth above, it is possible to cause more sufficient and effective crosslinking. From the same viewpoint, the concentration of the elastomer is more preferably 10 mass% or more. Particularly in a case in which a filler is dispersed in the elastomer, the concentration of the elastomer is preferably 20 mass% or more.

Note that a lower concentration of the elastomer results in the elastomer being in an immersed state in the solvent, whereas a higher concentration of the elastomer results in the elastomer being in a swollen state with the solvent.

No specific limitations are placed on specific conditions (temperature, time, etc.) in the diboronic acid contacting step. However, it is preferable that the elastomer is finely milled in advance in order to increase the frequency of contact with the diboronic acid compound. Moreover, solid-liquid separation treatment may be performed by a known method after the diboronic acid contacting step.

### EXAMPLES

The following describes the present invention in more detail through Examples. However, these Examples are for illustrative purposes.

Note that the following provides not only examples of the method of crosslinking an elastomer according to the present invention, but also of the step A and the step B for obtaining the elastomer, which are preceding steps, as a single series.

### (Production of crosslinked elastomer)

Elastomer compositions were produced according to formulations shown in Table 1. Next, each elastomer composition was heated under conditions shown in Table 1 and the storage modulus G' thereof was measured using a rubber process analyzer (produced by Alpha Technologies). The results are shown in Table 1. In each of the examples, the storage modulus G' was of roughly the desired value. Therefore, crosslinking was judged to have occurred.

Note that Reference Example 1 is an example of sulfur crosslinking (vulcanization) in which carbon black is not used as a filler, whereas Examples 1-1 to 1-4 are examples in which conditions are appropriately adjusted so as to obtain a storage modulus G' close to that in Reference Example 1 without using carbon black. Likewise, Reference Example 2 is an example of sulfur crosslinking (vulcanization) in which carbon black is used as a filler, whereas Example 1-5 is an example in which conditions are appropriately adjusted so as to obtain a storage modulus G' close to that in Reference Example 2 using carbon black.

### [Table 1]

**Table 1**

| | | Reference Example 1 | Example 1-1 | Example 1-2 | Example 1-3 | Example 1-4 | Reference Example 2 | Example 1-5 |
|---|---|---|---|---|---|---|---|---|
| Diene elastomer *1 | Parts by mass | 100 | 100 | 100 | 100 | 100 | 100 | 100 |
| BDB *2 | | 0 | 3 | 5 | 10 | 5 | 0 | 5 |
| CB *3 | | 0 | 0 | 0 | 0 | 0 | 50 | 50 |
| Radical initiator *4 | | 0 | 0.1 | 0.1 | 0.1 | 0.3 | 0 | 0.5 |
| Vulcanization accelerator DPG *5 | | 0.6 | 0 | 0 | 0 | 0 | 0.6 | 0 |
| Vulcanization accelerator MBTS *6 | | 0.6 | 0 | 0 | 0 | 0 | 0.6 | 0 |
| Vulcanization accelerator TBBS *7 | | 0.6 | 0 | 0 | 0 | 0 | 0.6 | 0 |
| Sulfur | | 1 | 0 | 0 | 0 | 0 | 1 | 0 |
| Proportion of BDB skeleton unit | Mass% | 0 | 2.9 | 4.8 | 9.1 | 4.8 | 0.0 | 4.8 |
| Heating temperature | °C | 160 | 160 | 160 | 160 | 120 | 160 | 120 |
| Heating time | min | 20 | 180 | 180 | 180 | 20 | 20 | 60 |
| Storage modulus G' of crosslinked elastomer | kPa | 570 | 300 | 350 | 410 | 420 | 800 | 800 |

| | | | | | | | | |
|---|---|---|---|---|---|---|---|---|
| *1 Diene elastomer: TUFDENE^{®} 2000R (TUFDENE is a registered trademark in Japan, other countries, or both) produced by Asahi Kasei Corporation, styrene-butadiene rubber, vinyl bond content 10 mass% to 26 mass%, weight-average molecular weight 373,000 (to 3 significant figures) *2 BDB: Diboronic acid ester compound represented by following formula (5) (synthetic product) 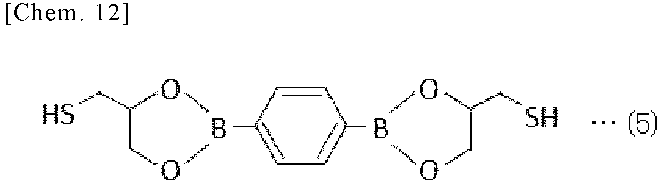 *3 CB: HAF grade carbon black *4 Radical initiator: Azobisisobutyronitrile (AIBN) *5 Vulcanization accelerator DPG: 1,3-Diphenylguanidine *6 Vulcanization accelerator MBTS: Di-2-benzothiazolyl disulfide *7 Vulcanization accelerator TBBS: N-(tert-Butyl)-2-benzothiazolesulfenamide | | | | | | | | |

Note that crosslinked elastomers obtained in Examples 1-1 to 1-5 were confirmed to include a diboronic acid ester skeleton unit represented by the following formula (6): 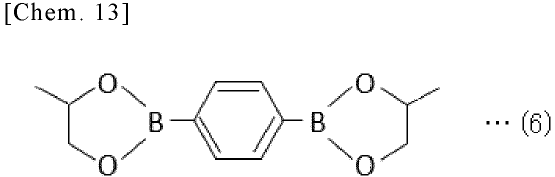 through appropriate use of solvent NMR. Moreover, in these crosslinked elastomers, a crosslink was formed through direct bonding of the above-described diboronic acid ester skeleton unit to a carbon that was a constituent of a vinyl group remaining in a vinyl bonded butadiene unit in the diene elastomer.

### (Decrosslinking treatment of crosslinked elastomer)

The crosslinked elastomer obtained in Example 1-4 was selected as a crosslinked elastomer in which carbon black was not mixed and the crosslinked elastomer obtained in Example 1-5 was selected as a crosslinked elastomer in which carbon black was mixed.

Each of these crosslinked elastomers was finely milled and was then loaded into tetrahydrofuran (THF; SP value: 8.95 (cal/cm³)^{1/2}) as an organic solvent. Phenylboronic acid (PhB(OH)₂) was further added as a monoboronic acid compound (BA), was thoroughly mixed therewith, and then the mixture was left to settle at room temperature (approximately 25°C) for 1 day. In the above, the concentration of the crosslinked elastomer (mass proportion of crosslinked elastomer among total of crosslinked elastomer and organic solvent) and the molar abundance ratio of the monoboronic acid compound relative to the diboronic acid ester skeleton unit in the crosslinked elastomer (BA/BDB skeleton unit) were set as shown in Table 2. After settling, casting was performed and solvent was evaporated to yield a treated elastomer.

### <Evaluation of decrosslinking>

The treated elastomer that was obtained was used to perform a roll forming operation. A case in which roll forming could be performed was evaluated as a case in which softness had been imparted as a result of decrosslinking (crosslinking sites returning to a non-crosslinked state). The results are shown in Table 2.

### [Table 2]

**Table 2**

| | Example 2-1 | Example 2-2 | Example 2-3 | Example 2-4 | Example 2-5 | Example 2-6 | Example 2-7 |
|---|---|---|---|---|---|---|---|
| Crosslinked elastomer (Example No.) | 1-4 (CB not used) | | | 1-5 (CB used) | | | |
| Crosslinked elastomer concentration (mass%) | 10 | 10 | 10 | 13 | 50 | 50 | 50 |
| BA/BDB skeleton unit (molar abundance ratio) | 3 | 3.5 | 4 | 2.5 | 2.5 | 3 | 3.5 |
| Evaluation of roll formability (decrosslinking) | O | O | O | O | O | O | O |
| Remarks relating to formed article of treated elastomer | Shrinkage | Shrinkage | Similar to initial | Fairly rough surface | Similar to initial | Similar to initial | Similar to initial |
| *Similar to initial: Similar quality to diene elastomer before crosslinking | | | | | | | |

It can be seen from Table 2 that an evaluation result of "O" was given for decrosslinking in all of Examples 2-1 to 2-7. In other words, the crosslinked elastomers obtained in Examples 1-4 and 1-5 could easily be decrosslinked by causing contact of the crosslinked elastomer with a monoboronic acid compound in the presence of a specific organic solvent.

Also note that for the treated elastomers (decrosslinked elastomers) obtained in Examples 2-1 to 2-7, it was confirmed through appropriate use of solution NMR that a site where the skeleton represented by formula (6) was bonded in the crosslinked elastomer prior to treatment had been capped by a functional group represented by the following formula (7): 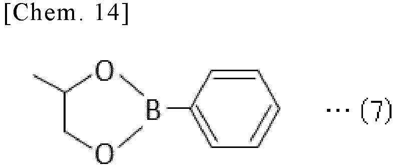 and thus crosslinking had been undone (crosslinking sites had returned to a non-crosslinked state). At the same time, it was confirmed through appropriate use of solution NMR that a diboronic acid compound ((1,4-phenylene)diboronic acid) represented by the following formula (8): 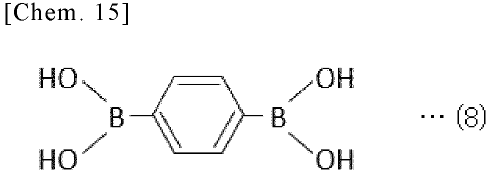 which is derived from the aforementioned skeleton, had been produced.

The crosslinked elastomers obtained in Examples 1-1 to 1-3 also include the diboronic acid ester skeleton unit described above. Therefore, these crosslinked elastomers are thought to be easy to decrosslink through the same treatment as described above.

### (Recrosslinking of decrosslinked elastomer)

The decrosslinked elastomer (treated elastomer) obtained in Example 2-2 or Example 2-3 was selected as a decrosslinked elastomer in which carbon black was not mixed and the decrosslinked elastomer (treated elastomer) obtained in Example 2-5 was selected as a decrosslinked elastomer in which carbon black was mixed.

Each of these decrosslinked elastomers was loaded into a solvent shown in Table 3 together with the diboronic acid compound produced during decrosslinking treatment. A radical initiator was further added according to a formulation shown in Table 3, and these were left to settle over night at room temperature (approximately 25°C). In the above, the concentration of the decrosslinked elastomer (mass proportion of decrosslinked elastomer among total of decrosslinked elastomer and solvent) was set as shown in Table 3. After settling, casting was performed and solvent was evaporated to yield a treated elastomer.

### <Evaluation of crosslinking (recrosslinking)>

The obtained treated elastomer was heated at 120°C for 10 minutes to 30 minutes (until the value of the storage modulus G' stabilized) and the storage modulus G' thereof was measured using a rubber process analyzer (produced by Alpha Technologies). In each of the examples, the measured storage modulus G' was at least 20% compared to the storage modulus G' of the crosslinked elastomer prior to addition of the monoboronic acid compound described above. Therefore, crosslinking was judged to have occurred in each of the examples. More specifically, crosslinking was judged to have occurred to a more sufficient degree and an evaluation of "O" was given in a case in which the measured storage modulus G' was 50% or more compared to the storage modulus G' of the crosslinked elastomer prior to addition of phenylboronic acid described above, whereas an evaluation of "Δ" was given in a case in which the measured storage modulus G' was less than 50% compared thereto. The results are shown in Table 3.

### [Table 3]

**Table 3**

| | | Example 3-1 | Example 3-2 | Example 3-3 | Example 3-4 | Example 3-5 | Example 3-6 | Example 3-7 |
|---|---|---|---|---|---|---|---|---|
| Decrosslinked elastomer (Example No.) | | 2-2 (CB not used) | | 2-3 (CB not used) | | 2-5 (CB used) | | |
| Decrosslinked elastomer | Parts by mass | 100 | 100 | 100 | 100 | 100 | 100 | 100 |
| Radical initiator *4 | Parts by mass | 0.5 | 0.5 | 0.3 | 0.3 | 1 | 1 | 0.5 |
| Type of solvent | | iPrOH | MeOH:THF 1:1 | MeOH:THF 1:1 | MeOH:THF 2:1 | MeOH:THF 1:1 | MeOH:THF 2:1 | MeOH:THF 4:1 |
| SP value of solvent (mixed solvent) | (cal/cm³)^{1/2} | 10.41 | 10.43 | 10.43 | 11.36 | 10.43 | 11.36 | 12.38 |
| Decrosslinked elastomer concentration | Mass% | 10 | 10 | 10 | 10 | 50 | 50 | 50 |
| Evaluation of crosslinking (recrosslinking) | | Δ | O | O | O | Δ | O | O |
| * iPrOH: Isopropanol (SP value: 10.41), MeOH: Methanol, THF: Tetrahydrofuran (SP value: 8.95) | | | | | | | | |

It can be seen from Table 3 that the decrosslinked elastomers obtained in Examples 2-2, 2-3, and 2-5 could easily be crosslinked (recrosslinked) by causing contact of the decrosslinked elastomer with a diboronic acid compound in the presence of a specific solvent.

Note that the treated elastomers (recrosslinked elastomers) obtained in Examples 3-1 to 3-7 were confirmed to include a diboronic acid ester skeleton unit represented by the following formula (6): 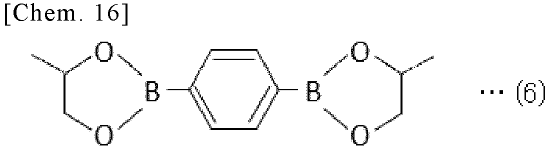 through appropriate use of solvent NMR. In other words, the treated elastomers (recrosslinked elastomers) obtained in Examples 3-1 to 3-7 had substantially the same structure as the crosslinked elastomers obtained in Examples 1-1 to 1-5.

### INDUSTRIAL APPLICABILITY

According to the present invention, it is possible to provide a method of crosslinking an elastomer that uses an elastomer that can easily be crosslinked and decrosslinked.

## Claims

1. A method of crosslinking an elastomer comprising a step of causing contact of an elastomer including a monoboronic acid ester-containing functional group represented by general formula (4), shown below, 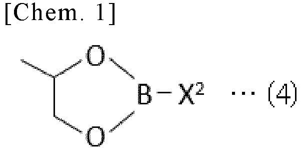 where, in general formula (4), X² is hydrogen or any monovalent group, with a diboronic acid compound in the presence of a solvent, wherein
the solvent has an SP value of not less than 10 (cal/cm³)^{1/2} and not more than 13 (cal/cm³)^{1/2} and includes at least a single solvent having an SP value of not less than 8 (cal/cm³)^{1/2} and not more than 10 (cal/cm³)^{1/2}, the SP value being calculated in accordance with the Hansen method.

2. The method of crosslinking according to claim 1, wherein an amount of the diboronic acid compound in the step of causing contact is 20 parts by mass or less relative to 100 parts by mass of the elastomer.

3. The method of crosslinking according to claim 1 or 2, wherein the elastomer is derived from a diene elastomer having a vinyl bond content of 30 mass% or less and a weight-average molecular weight of 1,000 or more, the weight-average molecular weight being determined by gel permeation chromatography (GPC) with polystyrene as standard substance.

## Patentansprüche

1. Verfahren zum Vernetzen eines Elastomers, umfassend einen Schritt des Bewirkens eines Kontakts eines Elastomers, das eine Monoboronsäureester enthaltende funktionelle Gruppe beinhaltet, die durch die unten gezeigte allgemeine Formel (4) dargestellt wird, 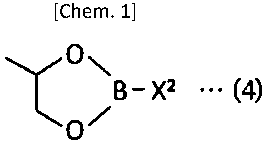
wobei in der allgemeinen Formel (4) X² Wasserstoff oder eine beliebige einwertige Gruppe ist, mit einer Diboronsäureverbindung in Gegenwart eines Lösungsmittels, wobei
das Lösungsmittel einen SP-Wert von nicht weniger als 10 (cal/cm³)^{1/2} und nicht mehr als 13 (cal/cm³)^{1/2} aufweist und mindestens ein einziges Lösungsmittel mit einem SP-Wert von nicht weniger als 8 (cal/cm³)^{1/2} und nicht mehr als 10 (cal/cm³)^{1/2} enthält, wobei der SP-Wert gemäß dem Hansen-Verfahren berechnet wird.

2. Vernetzungsverfahren nach Anspruch 1, wobei eine Menge der Diboronsäureverbindung im Schritt des Bewirkens des Kontakts 20 Massenteile oder weniger bezogen auf 100 Massenteile des Elastomers beträgt.

3. Vernetzungsverfahren nach Anspruch 1 oder 2, wobei das Elastomer von einem Dienelastomer mit einem Vinylbindungsgehalt von 30 Massenprozent oder weniger und einem gewichtsdurchschnittlichen Molekulargewicht von 1.000 oder mehr abgeleitet ist, wobei das gewichtsdurchschnittliche Molekulargewicht durch Gelpermeationschromatographie (GPC) mit Polystyrol als Standardsubstanz ermittelt wird.

## Revendications

1. Procédé de réticulation d'un élastomère comprenant une étape de mise en contact d'un élastomère incluant un groupe fonctionnel contenant un ester d'acide monoboronique représenté par la formule générale (4), présentée ci-dessous, 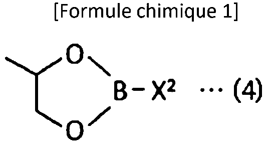
dans lequel, dans la formule générale (4), X² est hydrogène ou n'importe quel groupe monovalent, avec un composé d'acide diboronique en présence d'un solvant, dans lequel
le solvant présente une valeur de SP supérieure ou égale à 10 (cal/cm³)^{1/2} et inférieure ou égale à 13 (cal/cm³)^{1/2} et inclut au moins un solvant unique présentant une valeur de SP supérieure ou égale à 8 (cal/cm³)^{1/2} et inférieure ou égale à 10 (cal/cm³)^{1/2}, la valeur de SP étant calculée selon le procédé Hansen.

2. Procédé de réticulation selon la revendication 1, dans lequel une quantité du composé d'acide diboronique dans l'étape de mise en contact est de 20 parties en masse ou moins par rapport à 100 parties en masse de l'élastomère.

3. Procédé de réticulation selon la revendication 1 ou 2, dans lequel l'élastomère est dérivé d'un élastomère diénique présentant une teneur en liaisons vinyliques de 30 % en masse ou moins et un poids moléculaire moyen en poids de 1000 ou plus, le poids moléculaire moyen en poids étant déterminé par une chromatographie par perméation sur gel (GPC) avec du polystyrène comme substance étalon.
